Europäisches Patentamt

European Patent Office

Office européen des brevets

(19)

(11) Publication number: **0 277 356 B1**

## EUROPEAN PATENT SPECIFICATION

(12)

(45) Date of publication of patent specification: **19.02.92**

(51) Int. Cl.⁵: **G06F  15/20**

(21) Application number: **87119141.7**

(22) Date of filing: **23.12.87**

(54) **Spelling error correcting system.**

(30) Priority: **05.02.87 JP 23706/87**

(43) Date of publication of application:
**10.08.88 Bulletin  88/32**

(45) Publication of the grant of the patent:
**19.02.92 Bulletin  92/08**

(84) Designated Contracting States:
**DE FR GB IT**

(56) References cited:
**US-A- 3 969 698**
**US-A- 4 328 561**
**US-A- 4 355 371**

**IBM TECHNICAL DISCLOSURE BULLETIN, vol. 27, no. 1A, June 1984, page 417, New York, US; V.R. BASS et al.: "Virtual blank for spelling aid programs"**

**PATTERN RECOGNITION, vol. 15, no. 3, 1982, pages 271-273, Pergamon Press Ltd, Oxford, GB; J.K. MULLIN: "Interfacing criteria for recognition logic used with a context post-processor"**

(73) Proprietor: **International Business Machines Corporation**
**Old Orchard Road**
**Armonk, N.Y. 10504(US)**

(72) Inventor: **Itoh, Nobuyasu**
**302goh Residence Wakoh 27-1**
**Shimosakunobe**
**Takatsu-ku Kawasaki-shi Kanagawa-ken(JP)**
Inventor: **Takahashi, Hiroyasu 303goh Green-hill**
**Kamoshida Higashi-toh 533 Kamoshida-cho Midori-ku Yokohama-shi Kanagawa-ken(JP)**

(74) Representative: **Killgren, Neil Arthur**
**IBM United Kingdom Limited Intellectual Property Department Hursley Park Winchester Hampshire SO21 2JN(GB)**

## Description

The present invention relates to a spelling error correcting system to be used for automatically correcting wrongly spelled words or for advising an operator of the correct spellings of a small set of words, any of which are likely to be the word intended.

In order to reduce the load of text or data input into computers, there has been proposed a variety of input techniques such as OCR, speech input, etc., in addition to improvements to existing text editors. However, no prior techniques have succeeded in avoiding input errors completely and have required indispensably that wrong spellings be checked for and corrected after inputting. Therefore, programs have been developed for finding wrongly spelled words and then generating a set of candidate words, one of which is assumed to be correct, for each of the input character strings in error, which sets can, for example, be proffered to the operator.

Practically speaking, the efficiency of such programs is determined by by the efficiency of the process of selecting candidate words, namely words having relatively similar spellings, for each input character string. The candidate words are matched in detail by machine or operator with the input character string to determine a correct word. In the simplest technique, all words in a dictionary are used as candidates. Each of the words is matched with an input character string according to a predetermined formula of error distance, and the similarity to the input character string is calculated. However, since most of practical dictionaries each have a size of more than ten to twenty thousand words, the above technique is not practical in view of its high computing cost. Therefore, the following techniques, for example, have been proposed for narrowing down the range of candidate words to the desirable 'small set' prior to performing detailed matching.

(1) Only the words having the same leading character as that of an input word and differing in length by not more than a certain length (generally, one to three characters) from the length of the input word, are generated as candidates.

This technique is widely adopted in programs now in practical use, for example in IBM's Word Proof.

(2) The value of an input word is calculated from the spelling of the word according to a predetermined formula by assigning a fixed numeric value to each character in the word, and the aggregate numeric value of the word is used as a hashing key. "Dictionary" words whose hashing keys, using the same formula, differ from that of the error character string by up to a certain amount are used as candidates.

This technique is described in US Patent 3.969.698 of Ballinger et al. and in an article by W. S. Rosenbaum and J. J. Hilliard entitled "Multifont OCR Postprocessing System," IBM Journal of Research and Development, Vol. 19, No. 5, pp. 398 - 421, July 1975. It is detailed especially on pp. 403 - 404 thereof.

(3) A character category set obtained from an input word in error and a character category set obtained from each dictionary word are compared as to each component and the words having differences within a certain range are used as candidates. A set having, as its components, all character categories included in a word is defined as a character category set.

This technique is described in detail in Japanese Published Examined Patent Application No. 59 - 29910 (U.S.P. No. 4355371).

The above technique (1) is based on the assumption that the leading character in an input word has the highest probability of being uncorrupted. This assumption would be reasonable, to some extent, in case of keyboard inputting. However, in case of OCR, the assumption is not valid so that the actual correct word can be omitted from candidate words altogether due to an error in the leading input character with a probability equal to that of any single character being in error. Further, since the attrition rate of candidate words is low as it is based only on word length, it is generally necessary to combine another technique therewith, such as the technique of avoiding those lower probability candidates as determined by the statistics of misspelling.

The above technique (2) is considered unsatisfactory due to the fact that a correct word may be again omitted from the set of offered candidates if e.g. enough low value for high value substitution has taken place, although the cost for searching is low. Even though the numeric value assigned to each character has been carefully researched, a correct word may still be omitted in the worst case even for an input character string in which only a single character is corrupted.

The above technique (3) ensures that no correct word is omitted from the set of candidates provided the number of characters corrupted falls within a certain threshold. However, this technique requires that a character category set of an input character string and that of each word be compared. Although the computing cost per comparing operation is relatively low, the aggregate computing cost cannot be ignored when tens of thousands of words have to be compared.

In consideration of the above, what the present invention seeks to provide is a spelling error correcting system which ensures that the correct word is included in the candidate words set based on the spelling of an input word provided the input word includes only the number of replacements, deletions and/or additions of characters falls within a predetermined threshold, and which holds down the number of operations required to determine the candidate words to the minimum.

The present invention provides a spelling error correcting system which comprises:

means for storing a plurality of correctly spelled words, each of which is associated with one or more combinations of character categories, each combination consisting of m (m is a constant satisfying $m < n$) character categories out of n (n is a constant) character categories of those included in the correctly spelled word, the n character categories being the n leading character categories after sorting based on a predetermined rule associated with character categories;

means for sorting character categories included in an input word based on the predetermined rule for sorting;

means for obtaining all combinations of m character categories out of the n leading character categories of the sorted character categories;

means for reading from the storing means correctly spelled words associated with the obtained combinations of character categories; and

means for matching the input word with each of the read words.

As described hereinafter, candidate set selection is accomplished by selecting candidate words based on specified combinations of character categories in the character category sets of each word. The specified combinations of character categories are determined as follows:-

(1) The character categories included in an input word are sorted based on a predetermined rule.

(2) The n (an integer) leading character categories in the sorted character categories are selected.

(3) The combinations of character categories, each consisting of m (m is an integer satsifying $m < n$) character categories out of the n character categories, are generated.

The words in a dictionary have been stored therein, grouped according to thus extracted combinations of character categories. Since one word has generally a plurality of combinations of character categories, one word will generally be classified into a plurality of groups.

The selection of candidate words for an input word can be made by taking out the words included in one class or a pluality of classes (generally, a plurality of classes) specified by the combinations of character categories extracted from the input word.

As described, the combinations of character categories stated above may be considered as attributes of words. The attributes cannot be changed entirely so long as the replacement, deletion, or addition of characters of a word is within a predetermined range. Namely, at least one combination of character categories will remain even if such a misspelling has been made. Accordingly, a correct word will be included in one of the classes specified as stated above.

This ensures that a correct word will always be included in candidate word set so long as the replacement, deletion, or addition of characters is within a predetermined range, and yet that the classes of candidate words can be determined uniquely from the attributes of an input word, without requiring significantly complicated calculation.

The present invention will be described further by way of example with reference to an embodiment thereof in the context of a text input system employing an OCR for printed alphanumeric characters. It should be understood, however, that the present invention can also be applied to other input systems. In the drawings,

Fig. 1 shows a block diagram illustrating generally an embodiment of the present invention;

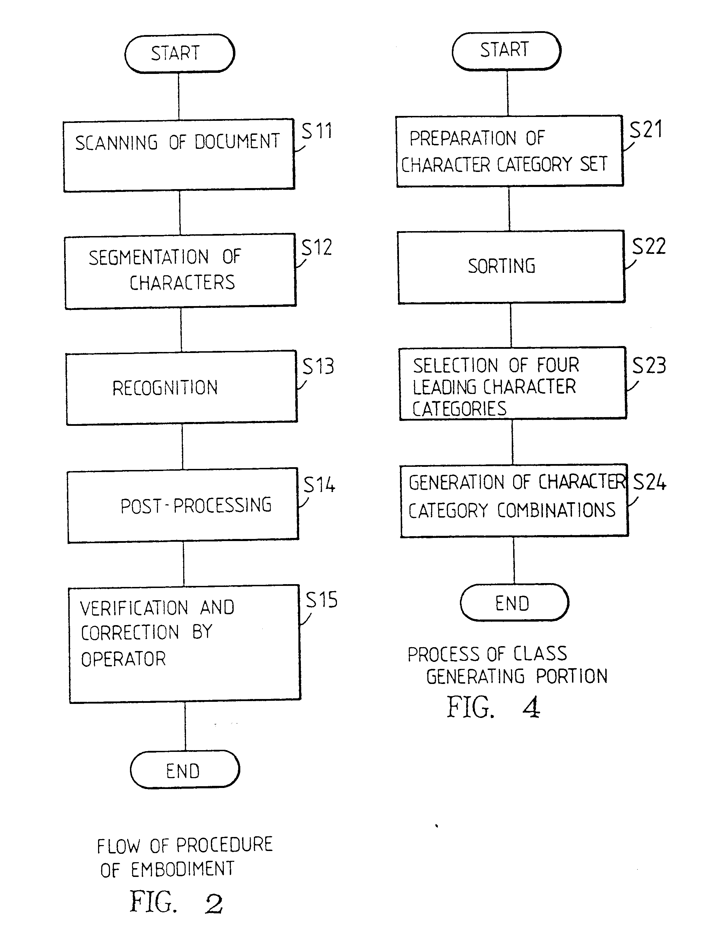

Fig. 2 shows a flow chart illustrating the procedure of the embodiment shown in Fig. 1;

Fig. 3 shows a block diagram illustrating the post-processing portion 6 shown in Fig. 1 in detail;

Fig. 4 shows a flow chart for explaining the class generating portion 9 shown in Fig. 3; and

Fig. 5 shows a schematic diagram illustrating an example of a word dictionary which is accessed by the retrieving mechanism 10.

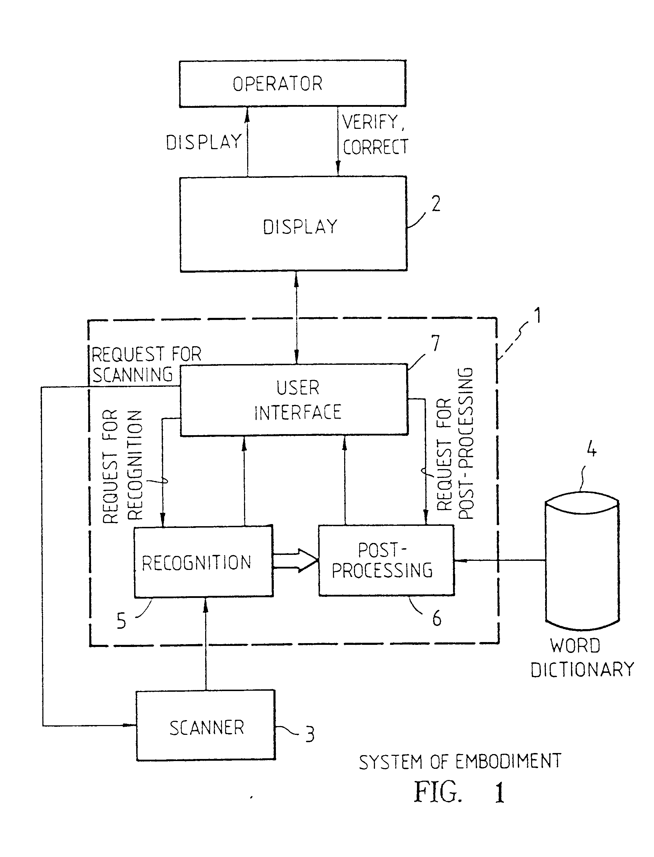

As shown in Fig. 1, the system comprises a personal computer 1, a bit map display 2, a scanner 3, and an auxiliary memory 4. The blocks within the broken line, namely a recognising portion 5, a post-processing portion 6, and a user interface portion 7, have been implemented as software. The recognising portion 5 may be implemented with hardware. The post-processing portion 6 can be implemented as software without causing any problems in the amount of computation or in the processing speed, as will be apparent from the following description.

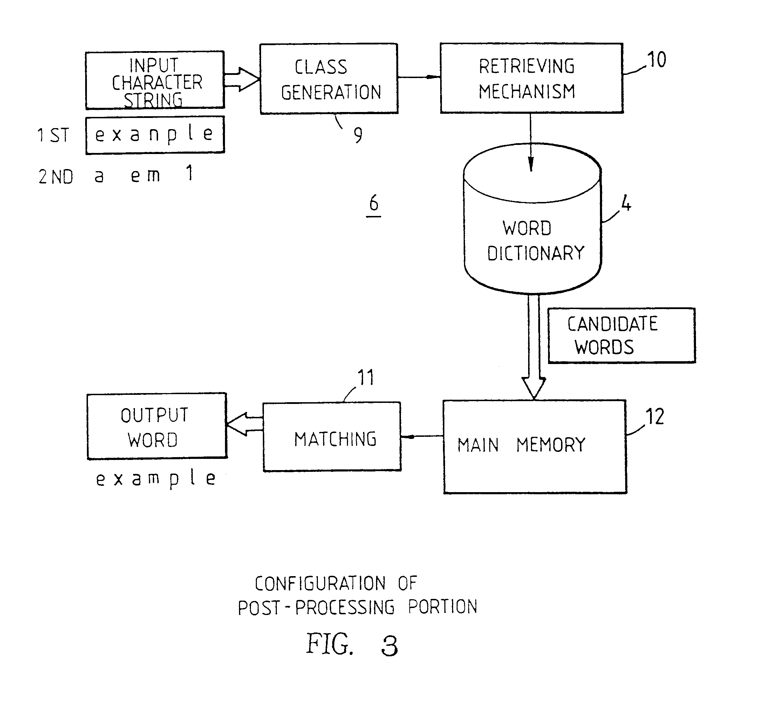

When an operator issues a processing start command, the user interface portion 7 first supplies a scanning request to the scanner 3. A text 8 is scanned by the scanner 3 and the results are supplied to the recognising portion 5 as a single image (S11). The recognising portion 5 segments the image into "characters" (S12), and then recognises which character is represented by that "character" part of the image (S13). The results of this recognition are not always uniquely determined and a plurality of candidate characters and, cumulatively, words may be outputted. In Fig. 3, as will be explained later, the first ranked, i.e., the most probable candidate character string (shown encircled) is generated. After the recognition of the characters of one "word", the user interface portion 7 supplies to the post-processing portion 6 a request for checking and correcting spelling errors as the result of the recognition. The post-processing portion 6 executes the determination of the spelling by referring to the word dictionary in the auxiliary memory 4 for a word therein matching the recognition result supplied from the recognising portion 5, and if the proper word cannot be found in the dictionary, a set of words having approximately the same spelling is retrieved (S14). This will be explained later in more detail. The resultant set of candidate words from step 14 is displayed on the display 2 through the user interface portion 7 for final recognition and correction (by selection) by the operator (S15). Thus, a coded correct text can be obtained.

The post-processing portion 6 has the following two functions:

(1) The portion checks whether or not an input character string is correctly spelled as a word (whether or not it exists in the dictionary).

(2) The operation retrieves words having spellings similar to that of the input character string (or the recognition result itself).

Since the above function (1) can be understood as a subset of the function (2), only the function (2) will be described below.

As shown in Fig. 3, the post-processing portion 6 comprises a class generating portion 9, a retrieving mechanism 10, a matching portion 11, and a main memory 12 of the personal computer 1. In this configuration, the first ranked candidate character string as the result of the recognition is first supplied to the class generating portion 9. The class generating portion generates classes as will be explained later in detail. The retrieving mechanism 10 accesses the word dictionary in the auxiliary memory 4 by using the generated classes as the keys and selects candidate words to be transferred to the main memory 12. Each candidate word obtained is matched with the input character string (or the recognition result) by the matching portion 11, and if the matching distance is within a threshold, the word is outputted as a likely word.

Next, the important portions of the post-processing portion 6 is described in more detail in sequence.

Class Generating Portion 9

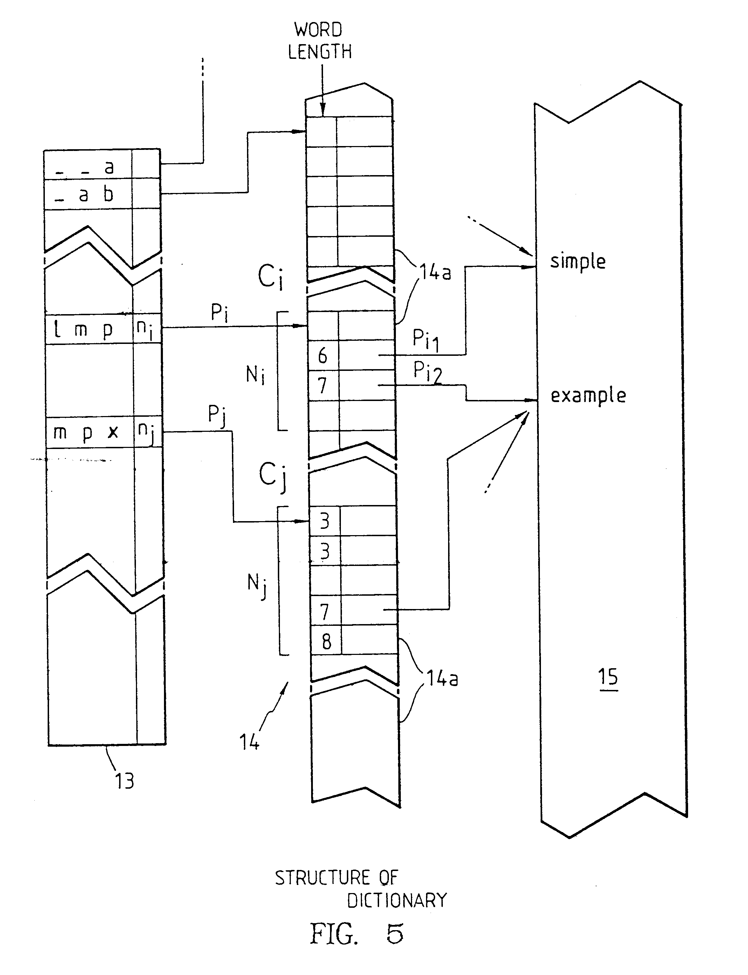

A "class" may be defined as the name of an attribute corresponding to a combination of character categories consisting of m character categories (m is an integer, for example 3). For example, (a, b, c) and (d, e, f) each form one class. When we say that a given word belongs to a specific class, it means that the combination of character categories which specifies the class exists among the combinations of the character categories obtained from the word by the procedure to be stated below. Now, referring to Fig. 4, the processing of the class generating portion 9 will be explained.

Step S21

A character category set for a word is prepared from the spelling of the word. As stated before with reference to the prior art, the character category set is a set having, as its components, all character categories included in the word.

example → (a, e, l, m, p, x)
apple → (a, e. l. p)
of → (f, o)

Step S22

The character category set is sorted, based on a predetermined rule. In this example, the ascending order of frequency of appearance of each character in the language concerned, ignoring the frequency of appearance of each word, is employed. The following table 1 shows the order of frequency of appearance of each character, and using the values set out therein, we get, after sorting:

(a, e, l, m, p, x) → (x, p, m, l, a, e)
(a, e, l, p) → (p, l, a, e)
(f, o) → (f, o)

## Table 1

### Frequency Order of Character Categories
#### (in the Ascending Order)

| 1 | 2 | 3 | 4 | 5 | 6 | 7 | 8 | 9 | 10 | 11 | 12 | 13 |
|---|---|---|---|---|---|---|---|---|----|----|----|----|
| j | q | x | z | w | k | v | f | b | y | g | h | p |

| 14 | 15 | 16 | 17 | 18 | 19 | 20 | 21 | 22 | 23 | 24 | 25 | 26 |
|----|----|----|----|----|----|----|----|----|----|----|----|----|
| m | d | u | c | s | l | t | o | n | r | i | a | e |

Step S23

A character category subset comprising the four leading character categories of the sorted components is generated. However, if the number of the components in the character category set is less than four, blank characters are added to form a four character category set. A plurality of blank characters may be added as required. The blank character is indicated as " - " in the following example:

(x, p, l, m, a, e)    --> (x, p, m, l)
(p, l, a, e)          --> (p, l, a, e)
(f, o)                --> (f, o, -, -)

Step S24

As stated above, a combination of three character categories is defined as one class. All the combinations of three character categories which can be formed by using the components of the character category subsets of the word are generated.

Generally, four combinations are generated. It is defined that the word belongs to the class or classes corresponding to the obtained combination or combinations of three character categories. In case of the English language, which has twenty-seven character categories including the blank character, there will exist 2951 ( = $_{27}C_3$ + 26) classes in total, to one or more (generally, four) of which each word belongs.

Thus "apple", of which the character category subset is (p, l, a, e), belongs to four classes: (a, l, p), (e, l, p) (a, e, p), and (a, e, l).

The word dictionary formed in a manner to be readily accessed by thus generated classes. The retrieving mechanism 10 and an example of the structure of the dictionary will be described below.

Retrieving Mechanism 10 and Example of Structure of Dictionary

As shown in Fig. 5, the dictionary comprises a first index portion 13, a second index portion 14, and a dictionary body 15. The first index portion 13 has entries which respectively correspond uniquely to classes, i.e., combinations of three character categories, e.g., (a, b, c), and has stored in each of them a head pointer pointing to the second index portion of the class and the number N of the words which belong to that class. The second index portion 14 has a plurality of partial areas 14a, each of which corresponds to an appropriate one of the classes. Each of the entries of the partial areas 14a in the second index portion 14 corresponds uniquely to one of the words in the class and includes a pointer to that word in the dictionary body 15 and a definition of the length of the word. Of course, the second index portion 14 may include additional information for further narrowing down candidate words. The entries themselves in each portion 14a are stored in sorted order using the length of each word and, secondarily, the pointer to the dictionary body 15 (for the significance of which, see the dictionary sort order hereinafter) as the sort keys, and all of the entries in one partial area can be accessed by reading out $n_i$ characters in sequence from the top pointer obtained from the first index portion 13, since $n_i$ is the character length of the class or the character length of the class plus the character length of any extra stored information relating to the class. Thus the dictionary body 15 includes spellings of words and, potentially, other information, and can be directly accessed by the pointer of each of the entries in the second index portion 14.

Further, in the above structure of the dictionary, it is preferred that the words belonging to each class are stored in sorted order so that the group of the words in the class which have, as their three leading character categories, the three character categories specifying the class, are stored so as to be accessed before the remainder of the words in the class. This can avoid potentially unnecessary retrieving operations when spellings are only to be checked as to whether they are correct or not, since the spelling of an input word can be checked to be correct or not only by being matched against, as candidates, only those words having the same three leading character categories as those of the input word. If a word having the same three leading character categories as those of the input word has been found, the input word is determined to be correctly spelled, and if not, the input word is determined to be wrongly spelled. When spelling errors are to be checked by using the dictionary illustrated in Fig. 5, a class is specified by the combination of three leading character categories of the input character string, and only the words having the combination of three leading character categories in the class are used to perform matching. Thus, unnecessary retrieving operations will be avoided by dividing the class into two groups. Clearly, the stored order of the words in a class can be further ordered and/or differently ordered to suit circumstances.

The manner in which the retrieving mechanism 10 accesses thus structured dictionary will be explained with reference to an example.

Assume a character category subset to be (x, p, m, l). When the retrieving mechanism 10 receives the class of (l, m, p) from the class generating portion 9, the retrieving mechanism 10 obtains the number $n_i$ of the words belonging to the class (l, m, p) from the first index portion 13, and the top pointer Pi to the partial area 14a (indicated by Ci) in the second index portion 14 wherein the information of the words are stored. Then, the retrieving mechanism 10 accesses the partial area Ci with the pointer Pi, and retrieves the words having differences of lengths within a predetermined threshold from the input character string by sequentially scanning the partial area to obtain the pointer Pik (k = 1, ..., Ni) to the proper words in the dictionary body 15. The retrieving mechanism 10 tracks the pointers to the dictionary body 15, and read the spellings of the words such as simple, example, etc., to be transferred to the main memory 12.

The further combinations of three character categories (m, p, x), (l, p, x), and (l, m, x), are used successively and candidate words are selected and transferred in the same way. In this case, there will be some word duplication as will be apparent if one considers the definition of a class. For example, the word "example," which belongs to each of the classes (l, m, p), (m, p, x), (l, p, x), and (l, m, x), will be transferred four times. The retrieving mechanism 10 can also provided with the facility for checking and avoiding such duplicated retrieving operations.

As stated above, the selection of candidate words is made by the class generating portion 9 and the retrieving mechanism 10 based on an input character string. The following table 2 shows candidate words thus obtained for various input character strings. In the table, only the candidate words each having a difference of length within 1 from that of the input character string have been selected. The dictionary has a size of approximately 11000 words.

6

Table 2

Input Character Strings and

Examples of Selected Candidate Words

| Input Character Strings | example | exanple | exaple | exsampll |
|---|---|---|---|---|
| Character Category Subsets | xpml | xpln | xpla | xpms |
| Candidate Words | example | example | example | example |
| | sample | explore | expel | expanse |
| | trample | explode | maple | postman |
| | temple | expense | exalt | glimpse |
| | simple | expanse | lapse | pajamas |
| | dimple | planet | ample | express |
| | compel | pencil | perplex | expense |
| | explore | expand | appeal | pessimism |
| | explode | explain | pearl | empress |
| | compile | plainly | panel | promise |
| | exclaim | external | plane | pastime |
| | explain | perplex | apple | persimmon |
| | climax | airplane | plate | expansion |
| | employ | appendix | place | exposurê |
| | employee | | apply | complex |
| | playmate | | paddle | impress |
| | promptly | | explore | tempest |
| | implore | | explode | compose |
| | smallpox | | petal | compass |
| | template | | pedal | presume |
| | pamphlet | | appall | supreme |
| | employer | | please | impulse |
| | monopoly | | palace | symptom |

| complex | plead | baptism |
|---------|-------|---------|
| pilgrim | relax | smallpox |
| problem | explain | optimism |
| perplex | apparel | emphasis |
| complete | appeal | shipment |
| platinum | repeal | steamship |
| platform | asleep | september |
| imperial | | explosion |
| proclaim | | expensive |
| complain | | explosive |
| | | primrose |
| | | imprison |
| | | specimen |
| | | composer |
| | | compress |
| | | comprise |
| | | imposing |
| | | sixpence |
| | | sportsman |
| | | imperious |
| | | promising |

Matching Portion 11

The matching portion 11 collates the selected candidate words and the input character string (or the recognition result) and measures to what extent they are similar. Any of the conventional methods may be adopted for the collation and the details will not be explained here since they will be apparent to the skilled in the art.

Finally, the advantages of the present embodiment of the invention may be summarised as follows.

(1) The technique does not rely on whether or not characters in specific positions in a word are correct. Especially, it is superior to the prior art (1) which is most widely used among the conventional methods in the point that it is independent of whether or not the leading character of a word is correct.

(2) The processing is easy. It will require a retrieving cost no more than that required in the hashing technique since the operations for obtaining character category subsets are made only by determining character categories in an input character string and performing set operations and also the number of components will be several at the most. Further, in accessing the dictionary, it is not required to access the dictionary body in the process of selecting candidate words and most of the processing will require only sequential access to the second index portion. There will be no practical problems in the access of the dictionary (the auxiliary memory 4).

(3) A correct word will always be included in candidate words provided the replacement, deletion or addition of characters is within a threshold (d - e) determined by the number of components (d) of a character category set used and the number of components (e) of the combinations of character categories. Even for replacements out of the threshold, it will be quite rare that words will be deformed so that the character category subsets will be largely changed under a proper rule for sorting (Although the present embodiment employs the rule of the ascending order of frequency in order to increase the reducing rate of the candidate words, the difficulty of occurrence may be employed as the rule.). Accordingly, the possibility that a correct word will be omitted from candidate words will be quite low.

(4) The retrieving operations required for checking spellings can be reduced by dividing the words in

8

each class into two groups in consideration of m leading character categories.

(5) Candidate words can be narrowed down efficiently since they are selected taking into consideration lengths of words as well as classification by combinations of character categories.

The character categories are not limited to English characters. The inputting may be made by using speech recognition or a keyboard. The number of components d of a character category subset or the number of components e of a character category combination may be changed variously. As the rule for sorting, other statistical information may be employed. Further, various alternative sorted structures may be adopted for the body of the dictionary.

As explained above, specific combinations of components of the character category set of a word are used as the attributes of the word and the words in the dictionary are sorted based on the attributes. On the other hand, similar attributes are extracted from an input word and the words of the class having the same attributes are taken out of the dictionary as the candidate words for the input word. Therefore, the required set of candidate words can be obtained with less computing. Further, the correction of spelling errors by replacement, deletion or addition of characters within a predetermined range based on the above rule of generating combinations is assured.

## Claims

1.  A spelling error correcting system which comprises:

    means for storing a plurality of correctly spelled words, each of which is associated with one or more combinations of character categories, each combination consisting of m (m is a constant satisfying m < n) character categories out of n (n is a constant) character categories of those included in the correctly spelled word, the n character categories being the n leading character categories after sorting based on a predetermined rule associated with character categories;

    means for sorting character categories included in an input word based on the predetermined rule for sorting;

    means for obtaining all combinations on m character categories out of the n leading character categories of the sorted character categories;

    means for reading from the sorting means correctly spelled words associated with the obtained combinations of character categories; and

    means for matching the input word with each of the read words.

2.  A system as claimed in Claim 1, wherein the n character categories may include one or more blank characters.

3.  A system as claimed in either preceding Claim, wherein the rule for sorting is the ascending order of frequencies of appearance of character categories in the language of the correctly spelled words

4.  A system as claimed in any preceding Claim, wherein the storing means comprises a main storage portion which stores correctly spelled words and an index portion which associates positions in the main storage portion with the combinations of character categories.

5.  A system as claimed in Claim 4, wherein the index portion narrows down the range of words to be read, according to the character categories in predetermined m string positions of the sorted character categories in the input word.

6.  A system as claimed in Claim 5, wherein the predetermined m string positions are m leading positions.

7.  A system as claimed in any one of Claims 4 to 6, wherein the index portion narrows down the range of words to be read, according to the length of the input word.

## Revendications

**1.** Système de correction de fautes d'orthographe qui comprend :

des moyens de stockage d'une pluralité de mots correctement orthographiés, dont chacun est associé à une ou plusieurs combinaisons de catégories de caractère, chaque combinaison étant composée de m (m est une constante satisfaisant à m < n) catégories de caractère sur n (n est une constante) catégories de caractère parmi celles qui sont incluses dans le mot correctement orthographié, les n catégories de caractère étant les n catégories de caractère de tête après un tri basé sur une règle pré-déterminée associée aux catégories de caractère ;

des moyens de tri des catégories de caractère incluses dans un mot d'entrée, sur la base de la règle de tri prédéterminée ;

des moyens d'obtention de toutes les combinaisons de m catégories de caractère sur les n catégories de caractère de tête des catégories de caractère triées;

des moyens d'extraction, à partir des moyens de tri, des mots correctement orthographiés associés aux combinaisons obtenues de catégories de caractère ; et

des moyens de comparaison du mot d'entrée avec chacun des mots extraits.

**2.** Système suivant la revendication 1, dans lequel les n catégories de caractère peuvent comprendre un ou plusieurs caractères en blanc,

**3.** Système suivant l'une ou l'autre de revendications précédentes, dans lequel la règle de tri est l'ordre croissant des fréquences d'apparition des catégories de caractère dans la langue des mots correctement orthographiés.

**4.** Système suivant l'une quelconque des revendications précédentes, dans lequel les moyens de stockage comprennent une partie de mémoire principale, qui stocke les mots correctement orthographiés, et une partie d'index qui associe les positions dans la partie de mémoire principale avec les combinaisons de catégories de caractère.

**5.** Système suivant la revendication 4, dans lequel la partie d'index réduit la plage de mots à lire, conformément aux catégories dans m positions de chaîne prédéterminées des catégories de caractère triées dans le mot d'entrée.

**6.** Système suivant la revendication 5, dans lequel les m positions de chaîne prédéterminées sont les m positions de tête.

**7.** Système suivant l'une quelconque des revendications 4 à 6, dans lequel la partie d'index réduit la plage des mots à lire, conformément à la longueur du mot d'entrée.

**Patentansprüche**

**1.** System zum Korrigieren von Rechtschreibfehlern, das aufweist:

ein Mittel zum Speichern einer Mehrzahl richtig geschriebener Wörter, bei welchem jedes einer oder mehreren Kombinationen von Schriftzeichenkategorien zugeordnet ist, wobei jede Kombination aus m (m ist eine Konstante, die m < n erfüllt) Schriftzeichenkategorien von n (n ist eine Konstante) Schriftzeichenkategorien jener besteht, die in dem richtig geschriebenen Wort beinhaltet sind, die n Schriftzeichenkategorien die n führenden Schriftzeichenkategorien nach einer Sortierung sind, die auf einer vorbestimmten, den Schriftzeichenkategorien zugeordneten Regel beruht,

Mittel zum Sortieren in einem Eingangswort beinhalteter Schriftzeichenkategorien auf der Basis der vorbestimmten Regel für das Sortieren,

Mittel zum Erhalten aller Kombinationen über m Schriftzeichenkategorien von den n führenden Schriftzeichenkategorien der sortierten Schriftzeichenkategorien,

Mittel zum Lesen richtig geschriebener, den erhaltenen Kombinationen von Schriftzeichenkategorien zugeordneter Wörter aus den Sortiermitteln und

Mittel zum Anpassen des Eingangswortes mit jedem der gelesenen Wörter.

**2.** System nach Anspruch 1, bei welchem die n Schriftzeichenkategorien ein oder mehrere Leerzeichen beinhalten können.

**3.** System nach irgend einem vorgehenden Anspruch, bei welchem die Regel für das Sortieren die steigende Ordnung von Häufigkeiten für das Auftreten von Schriftzeichenkategorien in der Sprache der richtig geschriebenen Wörter ist.

**4.** System nach irgend einem vorgehenden Anspruch, bei welchem das Speichermittel einen Hauptspeicherteil, der richtig geschriebene Wörter speichert, und einen Indexteil aufweist, der Positionen in dem Hauptspeicherteil den Kombinationen von Schriftzeichenkategorien zuordnet.

**5.** System nach Anspruch 4, bei welchem der Indexteil den Bereich zu lesender Wörter entsprechend den Schriftzeichenkategorien in vorbestimmten m Kettenpositionen der sortierten Schriftzeichenkategorien in dem Eingangswort einengt.

**6.** System nach Anspruch 5, bei welchem die vorbestimmten m Kettenpositionen m führende Positionen sind.

**7.** System nach irgend einem der Ansprüche 4 bis 6, bei welchem der Indexteil den Bereich zu lesender Wörter entsprechend der Länge des Eingangswortes einengt.

SYSTEM OF EMBODIMENT

FIG. 1

START

SCANNING OF DOCUMENT — S11

SEGMENTATION OF CHARACTERS — S12

RECOGNITION — S13

POST-PROCESSING — S14

VERIFICATION AND CORRECTION BY OPERATOR — S15

END

FLOW OF PROCEDURE OF EMBODIMENT

FIG. 2

START

PREPARATION OF CHARACTER CATEGORY SET — S21

SORTING — S22

SELECTION OF FOUR LEADING CHARACTER CATEGORIES — S23

GENERATION OF CHARACTER CATEGORY COMBINATIONS — S24

END

PROCESS OF CLASS GENERATING PORTION

FIG. 4

INPUT CHARACTER STRING

CLASS GENERATION

RETRIEVING MECHANISM 10

9

6

1ST  e x a n p l e

2ND  a   e m   1

WORD DICTIONARY 4

CANDIDATE WORDS

OUTPUT WORD

example

MATCHING 11

MAIN MEMORY 12

CONFIGURATION OF
POST - PROCESSING PORTION

FIG. 3

WORD
LENGTH

$C_i$
$P_i$ $N_i$
$P_j$
$C_j$ $N_j$

14a
$P_{i1}$
$P_{i2}$

6
7

3
3
7
8

14a

14

13

simple

example

15

STRUCTURE OF
DICTIONARY

FIG. 5